# EUROPEAN PATENT SPECIFICATION

(11) **EP 1 704 786 B1**
(45) Date of publication and mention of the grant of the patent: **26.11.2008**
(21) Application number: 06111665.3
(22) Date of filing: 24.03.2006
(51) Int. Cl.: A24C 5/34

(54) **A method and equipment for testing the quality of production in a tobacco product manufacturing line**
Verfahren und Vorrichtung zur Prüfung der Produktionsqualität in einer Linie zur Herstellung von Tabakprodukten
Procédé et dispostif pour le contrôle de la qualité de la production dans une ligne de fabrication de produits du tabac

(30) Priority: 24.03.2005 IT BO20050187
(43) Date of publication of application: 27.09.2006
(73) Proprietor: G.D S.p.A., 40133 Bologna (IT)
(72) Inventor: Draghetti, Fiorenzo, 40059, Medicina (Bologna) (IT); Coccolini, Davis, 40012, Calderara di Reno (Bologna) (IT); Ognibene, Moreno, 40037, Sasso Marconi (Bologna) (IT)
(74) Representative: Ghioni, Carlo Raoul Maria

(56) References cited:
- WO-A-00/16647
- US-A- 5 284 164
- US-A- 5 582 192
- US-A1- 2004 045 563
- US-A1- 2005 022 831

## Description

The present invention relates to a method and to equipment for testing production quality in a line for manufacturing tobacco products. A method for improving the quality of tobacco products is disclosed also in US 5 284 164.

The invention is applicable advantageously to the art field of complete lines for the manufacture of tobacco products, and of cigarettes in particular.

Such manufacturing lines, to which reference is made explicitly in the following specification albeit implying no limitation, generally comprise a cigarette maker, and a filter tip attachment machine connected to the cigarette maker.

The invention is concerned with testing various characteristics or properties of cigarettes during their passage along the manufacturing line and at the outfeed of the selfsame line. More exactly, the present invention is concerned with the control and calibration of reject devices positioned along the manufacturing line.

Conventionally, as cigarettes are formed and fed along a manufacturing line, they will undergo a number of tests each serving to verify that a given characteristic registers within certain limits.

Among the characteristics of cigarettes subjected to such tests, certain items are of key importance: the weight, the consistency of the filler at the cut ends, the degree of ventilation, the quality of the print, the integrity of the paper wrap, and the soundness of the join between filter and cigarette.

These quality control steps are implemented along the manufacturing line by dedicated testing units connected to suitable reject devices by which any cigarettes detected as not being in conformity with the aforementioned limits are taken up and ejected automatically, in response to an instruction from the selfsame testing units.

To this end, the testing units positioned along the line are supplied with signals reflecting the single physical parameters noted above, by sensors placed to monitor the characteristics as the cigarettes advance, which they then compare with previously programmed limit values.

These limit values must be programmed into each of the testing units according to the quality of cigarette required either from a particular system, in which case the values are entered at the time of installation, or for a particular production batch. Closer limits will result in a higher quality of end product and a higher percentage of cigarettes rejected during production.

For example, it is known from US 2005/022831 a method for controlling the quality of cigarettes produced in a manufacturing process by periodically extracting a sample of filter sections from a plurality of filter sections to be used to manufacture such cigarettes, testing the sampled filter sections to determine the value of certain specified quality parameters; by periodically extracting a sample of completed cigarettes from a plurality of finished cigarettes, testing the selected cigarettes to determine the value of certain specified quality parameters which are related to the quality parameters of the filter segments which have been measured.

It can happen during the manufacturing cycle that the malfunction of a testing unit will have the effect of altering the programmed limit values, causing the system to reject cigarettes of which the characteristics were in reality within normal limits, or fail to reject cigarettes of which the characteristics were in reality outside the normal limits.

The object of the present invention is to provide a method and equipment wherein the testing and reject devices positioned along a manufacturing line for tobacco products can be calibrated with ease according to production requirements dependent on the site where the line is installed and/or on the particular manufacturing cycle.

The stated object is realized, according to the present invention, in a method and equipment for testing the quality of production in a tobacco product manufacturing line, of which the essential features are recited in one or more of the appended claims.

The invention will now be described in detail, by way of example, with the aid of the accompanying drawings, in which:
- figure 1 shows the layout of equipment for testing production quality, associated with a cigarette manufacturing line, illustrated schematically and in perspective;
- figure 2 is a block diagram illustrating the operation of the equipment shown in figure 1.

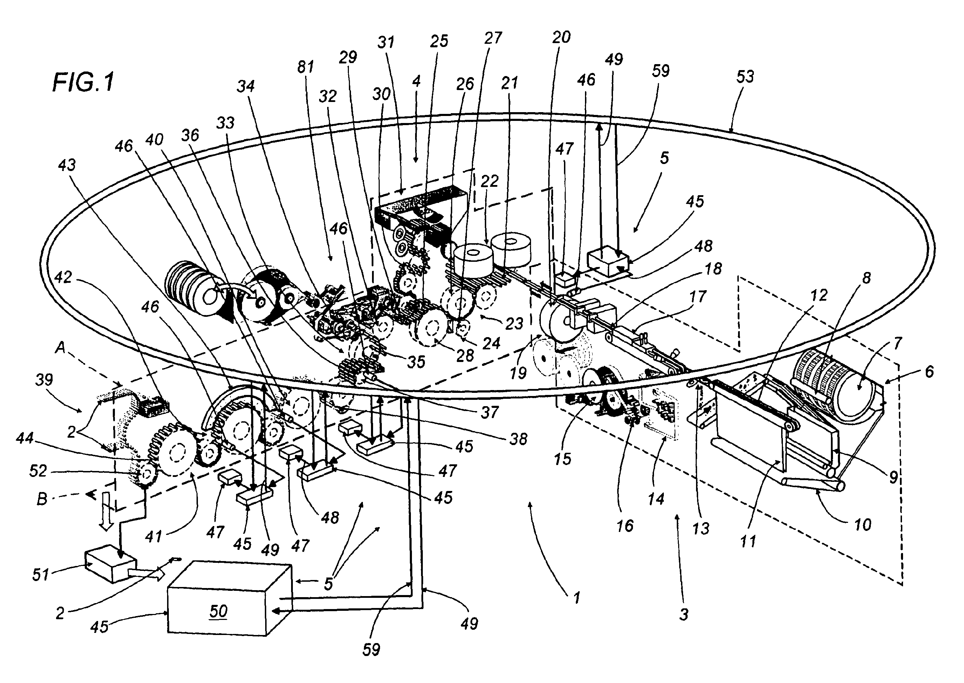

With reference to figure 1, numeral 1 denotes a production line, in its entirety, for the manufacture of tobacco products such as cigarettes, denoted 2, comprising a cigarette maker 3 and a filter tip attachment machine 4 each incorporating a plurality of devices and machine units that will be described in due course.

Associated with the line 1 is equipment denoted 5 in its entirety, for testing the quality of production, of which a more detailed account will be given in due course.

The cigarette maker 3 comprises a plurality of the aforementioned devices and machine units and, more exactly, is equipped at the upstream end with a carding unit 6 in receipt of tobacco from an infeed hopper (not illustrated); proceeding downstream, the tobacco is taken up onto a carding drum 7 and projected by an impeller roller 8, operating in conjunction with the carding drum 7, into a descent duct or chute 9, thence onto a belt conveyor 10 and into an ascent duct or chimney 11.

The top end of the chimney 11 is enclosed by an aspirating belt 12 on which the tobacco particles collect and are formed gradually into a continuous stream 13 that will ultimately provide the filler for the cigarettes 2.

The stream 13 of tobacco is released onto a strip of paper 14 decoiling from a roll 15 along a path that passes initially through a printing device 16, and advances into a garniture section 17 where it is enveloped longitudinally by the aforementioned strip 14 to form a continuous cigarette rod 18.

Whilst reference is made in the specification to a line manufacturing a single cigarette rod, the invention will also find application advantageously in dual or triple rod type cigarette makers.

The continuous rod 18 advances toward and through a cutting station 19 where it is divided up by a rotary cutter device 20 into discrete segments of predetermined and constant length, and more exactly into sticks 21 of length measuring twice the length of a stick making up a single cigarette 2.

Numeral 22 denotes a device by which the double length sticks 21 are transferred, through a set of infeed rollers 23 forming part of the filter tip attachment machine 4, to a cutting station 24 where each successive double length stick 21 is separated into two single cigarette sticks 25 by the action of a roller 26 and a disc cutter 27.

The single cigarette sticks 25 are directed from the roller 26 of the cutting station, first onto a distancing roller 28 on which the two sticks 25 separated by each cutting stroke are spaced apart axially one from the other, then onto an assembling roller 29, whereupon a double length filter plug 30 supplied by a respective feed unit, denoted 31 in its entirety, is interposed between the two single sticks 25 of each advancing pair.

The resulting assemblies, each consisting of two single cigarette sticks 25 and one double length filter plug 30 placed between them, are released from the assembling roller 29 onto a roller 32 that forms part of a finishing station 33, comprising a unit 34 by which tipping papers 35 are cut and fed to the selfsame station 33, and a rolling device 36 such as will take up the stick/double-filter/stick assemblies and the tipping papers 35 and roll each successive tipping paper 35 about a corresponding assembly to fashion a double length cigarette 2.

The double length cigarettes 2 are fed by way of an intermediate roller 37 to a cutter device 38 and divided by a cutting stroke made through the double length filter 30 to generate two successions of single filter cigarettes 2 appearing identical one to another.

The two successions of filter cigarettes 2 are directed toward an outfeed stage 39 of the filter tip attachment machine 4, advancing first onto an overturning roller 40 by which a single succession of cigarettes 2 is established, then passing onto a final train of rollers denoted 41 in its entirety, along which the cigarettes 2 will undergo further finishing steps of a familiar nature.

As illustrated in figure 1 for example, the final train 41 of rollers, supported together with the aforementioned rollers 23, 26, 28, 29 and 32 by a vertical bulkhead A associated with the frame B of the filter tip attachment machine 4, comprises a roller denoted 42 on which ventilation holes are pierced in the cigarettes 2 by a laser generator device 43, and a roller denoted 44 on which the cigarettes are scanned.

Still referring to figure 1, the quality control equipment 5 according to the invention comprises at least one testing unit 45 placed along the line 1 and furnished with sensors 46, shown schematically in the drawings, by means of which to examine at least one characteristic of the cigarettes 2 advancing along the selfsame line 1.

Figure 1 shows a number of such testing units 45, represented schematically by blocks, positioned at different points along the line 1 and serving for example to monitor the weight of each cigarette, the consistency of the end fill, the degree of ventilation, the quality of the print, the integrity of the paper wrap, and the soundness of the join between cigarette stick and filter tip.

The testing units 45 are also connected to reject devices 47, likewise positioned at different points along the production line 1, serving to take up and eject any cigarettes 2 that do not conform to the quality control parameters programmed into the testing units 45.

In effect, the sensors 46 are placed along the line 1 in such a way as to scan the cigarettes 2 and identify a value for each one in respect of a given characteristic, thereupon generating an output signal 48 that is received and processed by the respective in-line testing unit 45.

The testing unit 45 is able to compare the value of the signal with a respective reference value X or range of values ΔX programmed into the unit 45, in such a manner that the cigarettes 2 advancing along the production line 1 can be separated into a set of defective items, in which the value measured for the tested characteristic does not match the reference value X or does not register within the reference range ΔX, and a set of conforming items in which the value measured for the tested characteristic matches the reference value X or registers within the reference range ΔX.

Thus, the testing unit 45 can generate a first signal 49 reflecting the quality of the cigarette 2 which, during the normal manufacturing cycle, is sent to a respective reject device 47 as an instruction to pick out and eject each cigarette 2 found to be defective.

More exactly, the first signal 49 in question is an activating signal sent to the reject device 47 when the values measured for the characteristics of the cigarettes 2 do not fall within the reference range ΔX or do not match the reference value X.

For example, should it emerge from the values processed by the testing unit 45 that certain of the cigarettes 2 formed previously and then flipped by the overturning roller 40 have shed too much tobacco from the ends, the unit 45 will pilot the reject device 47 immediately downstream of the roller 40 to identify and eject these same cigarettes 2.

Importantly, the position of each cigarette 2 on the line 1 is known at any given moment, so that non-conforming cigarettes can be intercepted and ejected with absolute precision.

The equipment 5 further comprises an auxiliary testing unit 50 installed off-line and set up to run a full and additional check on the above noted characteristics of the cigarettes 3. The auxiliary unit 50, which for example would be of the type disclosed in application B02003A000684 for Italian patent, filed also by the present applicant, is connected on the infeed side by way of a cigarette sampling device, shown as a block denoted 51, to a roller 52 operating at the outfeed stage 39 of the filter tip attachment machine 4.

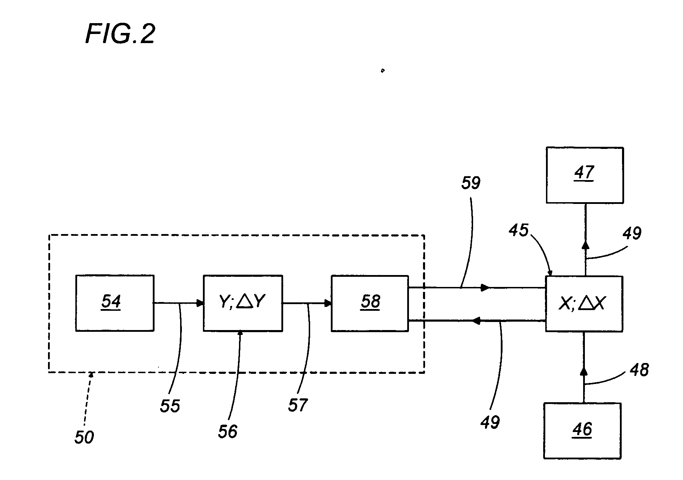

The auxiliary testing unit 50 also comprises data input and output connections to all of the in-line testing units 45, of which one only is indicated in figure 2 for the sake of simplicity, so as to form a common interface network 53 (figure 1) allowing the exchange of information.

The equipment 5 is able, in combination with the auxiliary testing unit 50, to calibrate the in-line units 45 by way of a calibration procedure that will now be described.

At the moment when the auxiliary testing unit 50 is activated, the reject devices 47 are deactivated temporarily so as to prevent cigarettes 2 flagged as defective along the production line 1 from being ejected; accordingly, these same cigarettes 2 can be intercepted at the outfeed 39 of the filter tip attachment machine 4 and diverted by the sampling device 51 into the auxiliary testing unit 50.

The sampling device 51 takes up a predetermined number of cigarettes 2 and transfers them to the auxiliary unit 50 which, through the agency of suitable sensors 54 of which one is illustrated schematically in figure 2, will identify a value reflecting the quality of a given characteristic presented by each cigarette 2 and generate a relative signal 55, which is received and processed by a central processing unit 56 of the auxiliary unit 50.

The CPU 56 examines the same characteristics as tested previously by the in-line units 45, so as to generate a second signal 57 reflecting the quality of each characteristic, for each cigarette 2.

In addition, the auxiliary testing unit 50 runs a comparison, shown schematically as a block 58 in figure 2, between the first signal 49 generated by an in-line testing unit 45 and the second signal 57 generated by the selfsame auxiliary unit 50. Should the first signal 49 reflecting the quality of the characteristic happen to differ from the second signal 57, a calibration signal 59 is sent by the auxiliary testing unit 50 to the in-line testing unit 45 so as to change the respective reference value X or range of values ΔX programmed into the in-line unit 45.

More exactly, the step whereby the aforementioned characteristic is checked by the auxiliary testing unit 50 consists in comparing the value of the characteristic with a respective calibration reference value Y or range of values ΔY programmed into the selfsame auxiliary unit 50, to the end of identifying a set of defective cigarettes 2, of which the measured characteristic does not match the calibration value or does not register within the calibration range, and a set of conforming cigarettes 2 of which the measured characteristic matches the calibration value or registers within the calibration range, and thereupon generating a second signal 57 to indicate non-conformity or conformity, respectively.

The calibration signal 59 sent to the in-line testing unit 45 thus determines the extent of the adjustment required to bring the reference value X or range of values ΔX, stored at the unit 45, into line with the calibration value Y or range of values ΔY stored at the auxiliary unit 50.

The auxiliary testing unit 50 is able to assess all the characteristics of the cigarettes 2 that are monitored by in-line units 45, and is connected to all of the in-line units 45 so that these can be calibrated simultaneously.

Once the in-line testing units 45 have been calibrated, the reject devices 47 are reactivated.

By way of example, the weight of a cigarette 2 measured during its passage along the manufacturing line 1 may register lower than a minimum reference value programmed into the dedicated weight testing unit 45. The testing unit 45 responds by sending a first signal 49 to the off-line auxiliary unit 50, indicating non-conformity, whilst the cigarette 2 is allowed to run through without being removed by the reject device 47 (temporarily inhibited).

The cigarette 2 is then diverted by the sampling device 51 into the auxiliary testing unit 50 and reweighed; if the weight is now found, for example, to be higher than the minimum calibration value, the CPU 56 of the auxiliary unit 50 generates a second signal 57 of conformity which is compared with the first signal 49 of non-conformity received from the in-line unit 45.

Since the two signals are dissimilar, the auxiliary testing unit 50 will send the calibration signal 59 so that the minimum reference value of the in-line unit 45 can be raised and brought, for example by successive increments, to the point at which it matches the minimum calibration value stored at the auxiliary testing unit 50.

Conversely, if the weight of the cigarette 2 measured during its passage along the manufacturing line 1 is correct, in other words greater than the minimum reference value, the testing unit 45 sends a signal 49 to the auxiliary unit 50 indicating conformity. If, when the cigarette 2 is reweighed by the auxiliary unit 50, its weight happens to register lower than the minimum calibration value, the CPU 56 of the unit 50 will generate a second signal 57 of non-conformity that is compared with the first signal 49 of conformity received from the in-line unit 45.

Since the two signals are dissimilar, the auxiliary testing unit 50 will send the calibration signal 59 so that the minimum reference value of the in-line unit 45 can be lowered to the point of matching the minimum calibration value stored at the auxiliary testing unit 50.

In this instance, deactivation of the reject device 47 would not be necessary.

The calibration value Y or range of values ΔY for each measured characteristic having been programmed manually into the auxiliary testing unit 50, the unit will be able to adjust the reference value X or range of values ΔX of all the in-line units 45 and reject devices 47 automatically, thereby optimizing the quality of the cigarettes 2 turned out on each line or in the course of each production run.

## Claims

1. A method of testing the quality of production in a line for manufacturing tobacco products, comprising at least the steps of examining and checking at least one characteristic of tobacco products (2) advancing along a manufacturing line (1) by means of at least one testing unit (45) placed along the selfsame line (1), in order to obtain a first signal (49) reflecting the quality of the tested characteristic presented by each product (2);
**characterised in that** it further comprises the steps of:
- providing reject devices (47) placed along the manufacturing line (1) and connected to the testing unit (45) for ejecting tobacco products (2) presenting quality of the tested characteristic not conforming to a quality standard programmed in the testing unit (45);
- temporarily deactivating said reject devices (47) for preventing tobacco products (2) flagged as defective from being ejected;
- intercepting said tobacco products (2) flagged as defective;
- sampling a predetermined number of tested tobacco products (2) **intercepted and** taken from the outfeed stage (39) of the line (1) and directing them into an auxiliary testing unit (50) installed off-line;
- examining and checking the at least one characteristic by means of the auxiliary testing unit (50), in order to obtain a second signal (57) reflecting the quality of the tested characteristic presented by each product (2);
- comparing the first signal (49) with the second signal (57);
- in the event of the first signal (49) reflecting the quality of the testing characteristic differing from the second signal (57) reflecting the quality of the tested characteristic, sending a correction signal (59) to the at least one in-line testing unit (45) and effecting the calibration of the selfsame unit (45).

2. A method as in claim 1, wherein the step of checking the at least one characteristic by means of the testing unit (45) placed along the manufacturing line (1) consists in comparing the value of the at least one characteristic with a relative reference value or range of values (X; ΔX) programmed into the testing unit (45) to the end of identifying the tobacco products (2), during their passage along the manufacturing line (1), as a set of defective products (2) in which the value of the tested characteristic does not match the reference value (X) or does not register within the reference range (ΔX), and a set of conforming products (2) in which the value of the tested characteristic matches the reference value (X) or registers within the reference range (ΔX), and generating a first signal (49) respectively of non-conformity or of conformity.

3. A method as in claim 2, wherein the step of checking the at least one characteristic by means of the auxiliary testing unit (50) consists in comparing the value of the at least one characteristic with a respective calibration value or range of values (Y; ΔY) programmed into the auxiliary unit (50), to the end of identifying a set of defective tobacco products (2) in which the value of the tested characteristic does not match the calibration value (Y) or does not register within the calibration range (ΔY), and a set of conforming tobacco products (2) in which the value of the tested characteristic matches the calibration value (Y) or registers within the calibration range (ΔY), and generating a second signal (57) respectively of non-conformity or of conformity.

4. A method as in claim 3, wherein the calibration signal (59) sent to the in-line testing unit (45) determines an adjustment to the reference value or range of values (X; ΔX) programmed into the in-line unit (45), such as will ensure uniformity with the calibration value or range of values (Y; ΔY), programmed into the auxiliary unit (50).

5. A method as in claim 1, including the further step of reactivating the reject devices (47) after the respective in-line testing units (45) have been calibrated.

6. Equipment for testing the quality of production in a line for the manufacture of tobacco products, comprising at least one testing unit (45) placed along the manufacturing line (1) and serving to examine and check at least one characteristic of tobacco products (2) advancing along the line (1), in order to obtain a first signal (49) reflecting the quality of the tested characteristic presented by each product (2),
**characterised in that** it further comprises:
- reject devices (47) placed along the manufacturing line (1) and connected to the testing unit (45) for ejecting tobacco products (2) presenting quality of the tested characteristic not conforming to a quality standard programmed in the testing unit (45);
- means adapted to temporarily deactivete said reject devices (47) for preventing tobacco products (2) flagged as defective from being ejected;
- means adapted to intercept said tobacco products (2) glagzed as defective;
- a sampling device (51) placed to take up a predetermined number of intercepted tested tobacco products (2) from the outfeed stage of the line (1) and direct them into an auxiliary testing unit (50) installed off-line, such as will examine and check the at least one characteristic in order to obtain a second signal (57) reflecting the quality of the tested characteristic presented by each product (2) ; and,
- the auxiliary testing unit (50) is connected to the at least one testing unit (45) operating in-line, able to compare the first signal (49) and the second signal (57) and programmed, in the event of the first signal (49) reflecting the quality of the testing characteristic differing from the second signal (57) reflecting the quality of the tested characteristic, to send a correction signal (59) to the at least one in-line testing unit (45) for the purpose of effecting the calibration of the selfsame unit (45).

## Patentansprüche

1. Verfahren zur Prüfung der Produktionsqualität in einer Linie zur Herstellung von Tabakprodukten, umfassend mindestens die Schritte des Untersuchens und Überprüfens mindestens eines Merkmals der Tabakprodukte (2), die sich entlang einer Produktionslinie (1) vorwärts bewegen, mit Hilfe mindestens einer Prüfeinheit (45), die entlang derselben Linie (1) angeordnet ist, um ein erstes Signal (49) zu erhalten, das die Qualität des geprüften Merkmals, die bei jedem Produkt (2) vorliegt, widerspiegelt;
**dadurch gekennzeichnet, dass** es ferner die folgenden Schritte umfasst:
- Bereitstellen von Aussonderungsvorrichtungen (47), die entlang der Produktionslinie (1) angeordnet und mit der Prüfeinheit (45) verbunden sind, um Tabakprodukte (2) mit einer Qualität des geprüften Merkmals, die einem in der Prüfeinheit (45) programmierten Qualitätsstandard nicht entspricht, auszuwerfen;
- vorübergehendes Deaktivieren der Aussonderungsvorrichtungen (47), um zu verhindern, dass als mangelhaft **gekennzeichnet**e Tabakprodukte (2) ausgesondert werden;
- Abfangen der als mangelhaft **gekennzeichnet**en Tabakprodukte (2);
- Entnehmen einer festgelegten Anzahl geprüfter Tabakprodukte (2) als Probe, die vom Auslauftisch (39) der Linie (1) abgefangen und entnommen sowie in eine zusätzliche Prüfeinheit (50), die von der Produktionslinie entkoppelt installiert ist, geleitet wird;
- Untersuchen und Überprüfen des mindestens einen Merkmals mit Hilfe der zusätzlichen Prüfeinheit (50), um ein zweites Signal (57) zu erhalten, das die Qualität des getesteten Merkmals, die bei jedem Produkt (2) vorliegt, widerspiegelt;
- Vergleichen des ersten Signals (49) mit dem zweiten Signal (57);
- falls das erste Signal (49), das die Qualität des Prüfmerkmals widerspiegelt, von dem zweiten Signal (57), das die Qualität des geprüften Merkmals widerspiegelt, abweicht, Senden eines Korrektursignals (59) an die mindestens eine in die Produktionslinie integrierte Prüfeinheit (45) und Bewirken der Kalibrierung derselben Einheit (45).

2. Verfahren nach Anspruch 1, wobei der Schritt des Überprüfens des mindestens einen Merkmals mit Hilfe der entlang der Produktionslinie
(1) angeordneten Prüfeinheit (45) darin besteht, den Wert des mindestens einen Merkmals mit einem entsprechenden Referenzwert oder -wertebereich (X; ΔX), der in die Prüfeinheit (45) einprogrammiert ist, zu vergleichen, um die Tabakprodukte (2) während ihres Durchlaufs entlang der Produktionslinie (1) als eine Menge mangelhafter Produkte (2) zu identifizieren, bei der der Wert des geprüften Merkmals weder dem Referenzwert (X) gleichkommt noch innerhalb des Referenzbereiches (ΔX) liegt, und als eine Menge den Vorgaben entsprechender Produkte
(2) zu identifizieren, bei der der Wert des geprüften Merkmals dem Referenzwert (X) gleichkommt oder innerhalb des Referenzbereiches (ΔX) liegt, und ein erstes Signal (49) der Nichtübereinstimmung bzw. Übereinstimmung zu erzeugen.

3. Verfahren nach Anspruch 2, wobei der Schritt des Überprüfens des mindestens einen Merkmals mit Hilfe der zusätzlichen Prüfeinheit (50) darin besteht, den Wert des mindestens einen Merkmals mit einem entsprechenden Kalibrierwert oder -wertebereich (Y; ΔY), der in die zusätzliche Prüfeinheit (50) einprogrammiert ist, zu vergleichen, um eine Menge mangelhafter Tabakprodukte (2) zu identifizieren, bei der der Wert des geprüften Merkmals weder dem Kalibrierwert (Y) gleichkommt noch innerhalb des Kalibrierbereiches (ΔY) liegt, und eine Menge den Vorgaben entsprechender Tabakprodukte (2) zu identifizieren, bei der der Wert des geprüften Merkmals dem Kalibrierwert (Y) gleichkommt oder innerhalb des Kalibrierbereiches (ΔY) liegt, und ein zweites Signal (57) der Nichtübereinstimmung bzw. Übereinstimmung zu erzeugen.

4. Verfahren nach Anspruch 3, wobei das an die in die Produktionslinie integrierte Prüfeinheit (45) gesendete Kalibriersignal (59) ein Einstellen des Referenzwerts oder -wertebereiches (X; ΔX) veranlasst, der in die in die Produktionslinie integrierte Prüfeinheit (45) einprogrammiert wird, derart, dass die Gleichheit mit dem in die zusätzliche Einheit (50) einprogrammierten Kalibrierwert oder -wertebereich (Y, ΔY) sichergestellt wird.

5. Verfahren nach Anspruch 1, umfassend den weiteren Schritt des Reaktivierens der Aussonderungsvorrichtungen (47), nachdem die jeweiligen in die Produktionslinie integrierten Prüfeinheiten (45) kalibriert worden sind.

6. Vorrichtung zur Prüfung der Produktionsqualität in einer Linie zur Herstellung von Tabakprodukten, umfassend mindestens eine Prüfeinheit (45), die entlang der Produktionslinie (1) angeordnet ist und dazu dient, mindestens ein Merkmal der Tabakprodukte (2), die sich entlang der Linie (1) vorwärts bewegen, zu untersuchen und zu überprüfen, um ein erstes Signal (49) zu erhalten, das die Qualität des geprüften Merkmals, die bei jedem Produkt (2) vorliegt, widerspiegelt,
**dadurch gekennzeichnet, dass** sie ferner umfasst:
- Aussonderungsvorrichtungen (47), die entlang der Produktionslinie (1) angeordnet und mit der Prüfeinheit (45) verbunden sind, um Tabakprodukte (2) mit einer Qualität des geprüften Merkmals, die nicht einem in der Prüfeinheit (45) programmierten Qualitätsstandard entspricht, auszuwerfen;
- Mittel, die dafür eingerichtet sind, dass sie die Aussonderungsvorrichtungen (47) vorübergehend deaktivieren, um zu verhindern, dass als mangelhaft **gekennzeichnet**e Tabakprodukte (2) ausgesondert werden;
- Mittel, die dafür eingerichtet sind, dass sie die als mangelhaft **gekennzeichnet**en Tabakprodukte (2) abfangen;
- einen Probenehmer (51), der angeordnet ist, um eine festgelegte Anzahl abgefangener, geprüfter Tabakprodukte (2) vom Auslauftisch der Linie (1) aufzunehmen und sie in eine zusätzliche Prüfeinheit (50), die von der Produktionslinie entkoppelt installiert ist, zu leiten, damit das mindestens eine Merkmal untersucht und überprüft wird, um ein zweites Signal (57) zu erhalten, das die Qualität des geprüften Merkmals, die bei jedem Produkt (2) vorliegt, widerspiegelt; und dass
- die zusätzliche Prüfeinheit (50), die mit der mindestens einen innerhalb der Produktionslinie betriebenen Prüfeinheit (45) verbunden ist, fähig ist, das erste Signal (49) und das zweite Signal (57) zu vergleichen, und so programmiert ist, dass sie, falls das erste Signal (49), das die Qualität des Prüfmerkmals widerspiegelt, von dem zweiten Signal (57), das die Qualität des geprüften Merkmals widerspiegelt, abweicht, ein Korrektursignal (59) an die mindestens eine in die Produktionslinie integrierte Prüfeinheit (45) sendet, um die Kalibrierung derselben Einheit (45) zu bewirken.

## Revendications

1. Un procédé pour le contrôle de la qualité de la production dans une ligne de fabrication de produits du tabac, comprenant au moins les phases consistant à examiner et à contrôler au moins une caractéristique des produits du tabac (2) qui avancent le long d'une ligne de fabrication (1) par l'intermédiaire d'au moins une unité de contrôle (45) placée le long de cette même ligne (1), afin d'obtenir un premier signal (49) indiquant la qualité de la caractéristique contrôlée présentée par chaque produit (2) ;
ledit procédé étant **caractérisé en ce qu'**il comprend en outre les phases consistant à :
- prévoir des dispositifs de mise au rebut (47), placés le long de la ligne de fabrication (1) et reliés à l'unité de contrôle (45), pour éjecter les produits du tabac (2) dont la qualité de la caractéristique contrôlée n'est pas conforme à un standard de qualité programmé dans l'unité de contrôle (45) elle-même ;
- désactiver temporairement lesdits dispositifs de mise au rebut (47) pour empêcher l'éjection des produits de tabac (2) identifiés comme étant défectueux ;
- intercepter lesdits produits du tabac (2) identifiés comme étant défectueux ;
- échantillonner un nombre prédéfini de produits du tabac (2) contrôlés, interceptés et prélevés au niveau d'une section de sortie (39) de la ligne (1), et les acheminer dans une unité de contrôle auxiliaire (50) montée hors ligne ;
- examiner et contrôler ladite au moins une caractéristique par l'intermédiaire de l'unité de contrôle auxiliaire (50), afin d'obtenir un deuxième signal (57) indiquant la qualité de la caractéristique contrôlée présentée par chaque produit (2) ;
- comparer le premier signal (49) avec le deuxième signal (57) ;
- si le premier signal (49) indiquant la qualité de la caractéristique contrôlée diffère du deuxième signal (57) indiquant la qualité de la caractéristique contrôlée, envoyer un signal de correction (59) à ladite au moins une unité de contrôle (45) en ligne et effectuer l'étalonnage de cette même unité (45).

2. Le procédé selon la revendication 1, **caractérisé en ce que** la phase de contrôle de ladite au moins une caractéristique par l'intermédiaire de l'unité de contrôle (45) placée le long de la ligne de fabrication (1) consiste à comparer la valeur de ladite au moins une caractéristique avec une valeur ou plage de valeurs de référence (X; ΔX respective, programmée dans l'unité de contrôle (45), afin d'identifier les produits du tabac (2), pendant leur passage le long de la ligne de fabrication (1), comme une série de produits (2) défectueux où la valeur de la caractéristique contrôlée ne correspond pas à la valeur de référence (X) ou ne rentre pas dans la plage de référence (ΔX), et comme une série de produits (2) conformes où la valeur de la caractéristique contrôlée correspond à la valeur de référence (X) ou rentre dans la plage de référence (ΔX), et à générer un premier signal (49) de non-conformité ou, respectivement, de conformité.

3. Le procédé selon la revendication 2, **caractérisé en ce que** la phase de contrôle de ladite au moins une caractéristique par l'intermédiaire de l'unité de contrôle auxiliaire (50) consiste à comparer la valeur de ladite au moins une caractéristique avec une valeur ou plage de valeurs d'étalonnage (Y; ΔY) respective, programmée dans l'unité auxiliaire (50), afin d'identifier une série de produits du tabac (2) défectueux où la valeur de la caractéristique contrôlée ne correspond pas à la valeur d'étalonnage (Y) ou ne rentre pas dans la plage d'étalonnage (ΔY), et une série de produits du tabac (2) conformes où la valeur de la caractéristique contrôlée correspond à la valeur d'étalonnage (Y) ou rentre dans la plage d'étalonnage (ΔY), et à générer un deuxième signal (57) de non-conformité ou, respectivement, 1 de conformité.

4. Le procédé selon la revendication 3, **caractérisé en ce que** le signal d'étalonnage (59) envoyé à l'unité de contrôle (45) en ligne détermine un ajustement de la valeur ou plage de valeurs de référence (X; ΔX) programmée dans ladite unité (45) en ligne, de manière à assurer l'uniformité avec la valeur ou plage de valeurs d'étalonnage (Y; ΔY) programmée dans l'unité auxiliaire (50).

5. Le procédé selon la revendication 1, **caractérisé en ce qu'**il comprend la phase supplémentaire consistant à réactiver les dispositifs de mise au rebut (47) après étalonnage des unités de contrôle en ligne (45) respectives.

6. Un dispositif pour le contrôle de la qualité de la production dans une ligne de fabrication de produits du tabac, comprenant au moins une unité de contrôle (45) placée le long de la ligne de fabrication (1) et servant à examiner et à contrôler au moins une caractéristique des produits du tabac (2) qui avancent le long de ladite ligne (1), afin d'obtenir un premier signal (49) indiquant la qualité de la caractéristique contrôlée présentée par chaque produit (2),
ledit dispositif étant **caractérisé en ce qu'**il comprend en outre :
- des dispositifs de mise au rebut (47), placés le long de la ligne de fabrication (1) et reliés à l'unité de contrôle (45), pour éjecter les produits du tabac (2) dont la qualité de la caractéristique contrôlée n'est pas conforme à un standard de qualité programmé dans l'unité de contrôle (45) elle-même ;
- des moyens destinés à désactiver temporairement lesdits dispositifs de mise au rebut (47) afin d'empêcher l'éjection des produits du tabac (2) identifiés comme étant défectueux ;
- des moyens destinés à intercepter lesdits produits du tabac (2) identifiés comme étant défectueux ;
- un dispositif d'échantillonnage (51) positionné de manière à prélever un nombre prédéfini de produits du tabac (2) contrôlés et interceptés au niveau d'une section de sortie de la ligne (1) et à les acheminer dans une unité de contrôle auxiliaire (50), montée hors ligne, destinée à examiner et à contrôler ladite au moins une caractéristique afin d'obtenir un deuxième signal (57) indiquant la qualité de la caractéristique contrôlée présentée par chaque produit (2) ; et,
- l'unité de contrôle auxiliaire (50) est reliée à ladite au moins une unité de contrôle (45) en ligne, est destinée à comparer le premier signal (49) et le deuxième signal (57) et, si le premier signal (49) indiquant la qualité de la caractéristique contrôlée diffère du deuxième signal (57) indiquant la qualité de la caractéristique contrôlée, est programmée pour envoyer un signal de correction (59) à ladite au moins une unité de contrôle (45) en ligne afin d'effectuer l'étalonnage de cette même unité (45).
